(19) Europäisches Patentamt
European Patent Office
Office européen des brevets

(11) EP 1 022 313 A1

(12) **EUROPEAN PATENT APPLICATION**
published in accordance with Art. 158(3) EPC

(43) Date of publication:
**26.07.2000 Bulletin 2000/30**

(21) Application number: **98941765.4**

(22) Date of filing: **07.09.1998**

(51) Int. Cl.[7]: **C08L 77/00**, C08K 3/34

(86) International application number:
**PCT/JP98/04023**

(87) International publication number:
**WO 99/13006 (18.03.1999 Gazette 1999/11)**

(84) Designated Contracting States:
**CH DE FR GB IT LI**

(30) Priority: **08.09.1997 JP 24224597**
**18.03.1998 JP 6751498**
**14.05.1998 JP 13089798**

(71) Applicant: **UNITIKA LTD.**
**Amagasaki-shi, Hyogo 660-0824 (JP)**

(72) Inventors:
- **WAKAMURA, Kazuyuki,**
**Unitika Ltd**
**Kyoto 611-0021 (JP)**
- **YAMAZAKI, Masaaki,**
**Unitika Ltd**
**Kyoto 611-0021 (JP)**
- **KURATANI, Katsumi,**
**Unitika Ltd**
**Kyoto 611-0021 (JP)**
- **FUJII, Hiromu,**
**Unitika Ltd**
**Kyoto 611-0021 (JP)**

(74) Representative: **HOFFMANN - EITLE**
**Patent- und Rechtsanwälte**
**Arabellastrasse 4**
**81925 München (DE)**

# (54) POLYAMIDE RESIN COMPOSITION

(57) A polyamide resin composition having excellent mechanical strengths such as bending strength and flexural modulus, heat and impact resistances, and a light weight, and being capable of having a metallic appearance. By homogeneously dispersing 0.1 to 10% by weight of a phyllosilicate on a molecular level in the polyamide resin composition, a reinforced polyamide resin can be formed. 0.1 to 10 parts by weight of metallic color-developing particles are incorporated into 100 parts by weight of the reinforced polyamide resin.

EP 1 022 313 A1

## Description

FIELD OF THE INVENTION

The present invention relates to a polyamide resin composition. Moldings of the polyamide resin composition are lightweight and tough and have good heat resistance, good impact resistance and good thermal discoloration resistance, and, even though not overcoated, their surfaces exhibit beautiful metallic color tones. In particular, the invention relates to such a polyamide resin composition favorable to engine covers for vehicles, interior and exterior covers for home appliances, etc.

BACKGROUND OF THE INVENTION

In general, engine covers for vehicles, interior and exterior covers for home appliances and the like are made of thermoplastic resins such as polyamide resins, etc. The resin moldings are often required to have metallic tone appearances of steel or aluminum alloys. In particular, these days, there is an increasing demand for resin moldings with beautiful appearances, and not only resin moldings having ordinary metallic color tones but also those having glossy but non-glaring metallic color tones are desired. Regarding the metallic color tones of resin moldings, various types are desired, including silver-gray tones and even milky and gray-white tones.

To meet these requirements, heretofore a method of coating resin moldings with a coating material containing a metal powder of aluminum or the like was employed, and this method is called the metallic coating method. However, as organic solvents are used therein, the metallic coating method is problematic with respect to the working environment. In addition, as its productivity is low, the method is expensive.

To solve the above problems, a resin composition comprising a thermoplastic resin such as a polyamide resin or the like has been proposed, in which the resin is filled with a metal powder of aluminum or the like, or with glossy particles of mica, wollastonite, glass or the like coated with metal.

For example, Japanese Patent Publication No. Sho 57-40181 proposes a resin composition comprising a synthetic resin such as polyethylene, poly(vinyl chloride) or the like blended with aluminum powder.

Also proposed is a resin composition that comprises a thermoplastic resin and powdery aluminum particles having a specific particle size and a specific aspect ratio, to thereby prevent its moldings from having flow patterns such as weld lines and the like (Japanese Patent Publication Nos. Hei 6-99592, Hei 6-99593 and Hei 6-99594).

Further proposed are various resin compositions comprising a thermoplastic resin such as a poly(ethylene terephthalate) resin, an ABS resin or the like to which are added aluminum powder and a pearly pigment of mica for improving the metallic gloss of the moldings of the compositions (Japanese Unexamined Patent Publications Nos. Sho 50-89443 and Sho 55-45753, Japanese Patent No. 2,524,922, etc.).

However, the moldings of the resin compositions mentioned above are all problematic in their toughness and heat resistance, though having metallic color tones.

On the other hand, a resin composition has been proposed comprising a thermoplastic resin with aluminum powder or the like, to which are added any of mica and glass fibers for improving the toughness and the heat resistance of the moldings of the composition (Japanese Patent No. 2,718,083). However, the moldings of the resin composition are problematic in that they could hardly have beautiful metallic tone appearances and are heavy, although their heat resistance and toughness could be improved.

Japanese Unexamined Patent Publication No. Hei 9-76272 proposes a resin composition comprising a thermoplastic resin such as polypropylene or the like blended with electroconductive particles and piezoelectric particles. The moldings of the resin composition have good impact resistance but are not tough, and, in addition, the cost for producing such moldings are high.

The resin compositions mentioned above may be suitable for interior and exterior covers for home appliances, but must have further improved thermal discoloration resistance when used under high-temperature conditions for a long period of time, for example, for engine covers for vehicles. As discussed hereinabove, however, prior investigators have not yet obtained a resin composition capable of being formed into moldings having a good appearance and satisfactory thermal discoloration resistance.

SUMMARY OF THE INVENTION

An object of the present invention is to provide a polyamide resin composition capable of being formed into lightweight and tough moldings which have good heat resistance, good impact resistance and good thermal discoloration resistance and, even when not overcoated, exhibit beautiful metallic color tones.

We, the present inventors have assiduously made studies so as to solve the problems noted above, and, as a result, have completed the invention.

The invention provides a polyamide resin composition, which comprises 100 parts by weight of a polyamide resin reinforced with from 0.1 to 10 % by weight of a layered silicate uniformly dispersed therein on a molecular level, and from 0.1 to 10 parts by weight of particles capable of expressing a metallic color.

In the polyamide resin composition of the invention, the essential ingredient, polyamide resin, is reinforced with a layered silicate uniformly dispersed therein on a molecular level. Therefore, moldings of the composition are lightweight and tough, and have good heat resistance and good impact resistance.

In addition, the composition contains from 0.1 to 10 parts by weight, relative to 100 parts by weight of the reinforced polyamide resin therein, of particles capable of expressing a metallic color. Therefore, the moldings of the composition can have a metallic surface.

Moreover, because it is recyclable, the polyamide resin composition has the advantage of cost saving.

<u>DETAILED DISCRIPTION OF THE PREFERRED EMBODIMENTS</u>

The polyamide resin composition of the invention comprises a polyamide resin reinforced with from 0.1 to 10 % by weight of a layered silicate uniformly dispersed therein on the molecular level, to which must be added from 0.1 to 10 parts by weight, relative to 100 parts by weight of the resin therein, of particles capable of expressing a metallic color.

The resin which is the essential ingredient of the resin composition of the invention is a polyamide resin reinforced with from 0.1 to 10 % by weight of a layered silicate uniformly dispersed therein on the molecular level. Comprising the reinforced polyamide resin, therefore, the moldings of the resin composition are lightweight and tough and have excellent mechanical properties including good heat resistance and good impact resistance.

In addition, the resin composition must contain from 0.1 to 10 parts by weight, relative to 100 parts by weight of the specifically reinforced polyamide resin therein, of particles capable of expressing a metallic color. If the amount of the metallic color-expressing particles in the resin composition is smaller than 0.1 parts by weight, moldings of the composition do not have a metallic surface; but if larger than 10 parts by weight, the proportion of the reinforced polyamide resin in the resin composition decreases and the moldability of the composition will be poor.

Adding metallic color-expressing particles to the reinforced polyamide resin in the specific ratio as above makes it possible to realize resin moldings which are tough and have a glossy metallic surface. Since the resin composition can be prepared simply by adding metallic color-expressing particles to the reinforced polyamide resin, the cost for producing moldings of the composition could be lower than that for producing conventional metal-coated moldings.

As for the resin which is the essential ingredient of the polyamide resin composition of the invention, a polyamide resin reinforced with from 0.1 to 10 % by weight, but preferably from 1 to 10 % by weight, of a layered silicate dispersed uniformly therein on the molecular level is indispensably used.

In the reinforced polyamide resin, if the amount of the layered silicate is smaller than 0.1 % by weight, the mechanical strength including the flexural strength and the flexural modulus of moldings of the composition will be low, and the heat resistance thereof will be poor; but if larger than 10 % by weight, molding the composition by injection will be difficult.

Dispersing a layered silicate uniformly on the molecular level in a polyamide resin means that the layers of the layered silicate are dispersed in the polyamide resin matrix while being spaced from each other via an interlayer distance of at least 20 Å on average between adjacent layers. The interlayer distance between the adjacent layers of the layered silicate indicates the distance between the center of gravity of one layer of the layered silicate and that of the other adjacent thereto; and uniform dispersion of layered silicate molecules in the polyamide resin matrix indicates that single-layered or multi-layered layered silicate molecules of at most 5 layers on average are dispersed in parallel with each other and/or at random with at least 50 % but preferably at least 70 % of the molecules not being in aggregated clumps. As one example, reference is made to a swellable fluoromica mineral for the layered silicate, which is dispersed uniformly on the molecular level in a polyamide resin. In this case, the resin pellets subjected to wide-angle X-ray diffractiometry are characterized in that the diffraction pattern fails to give a peak at 12 to 13 Å intrinsic to the swellable fluoromica mineral in its thickness direction. Through this analysis, therefore, the dispersed condition of the swellable fluoromica mineral in the polyamide resin matrix can be confirmed. In the polyamide resin composition of the invention, the essential ingredient, polyamide resin, is reinforced with a layered silicate which is dispersed uniformly on the molecular level in the polyamide resin matrix in the manner as discribed above. Therefore, the moldings of the composition have the advantage of not only high mechanical strength including high flexural strength and high flexural modulus, but also good heat resistance and high impact resistance.

In the polyamide resin reinforced with a layered silicate dispersed uniformly therein on the molecular level, the amount of the reinforcing material, layered silicate could be reduced. Therefore, moldings of the layered silicate-reinforced polyamide resin can be more lightweight, when compared with those of other polyamide resins reinforced with a fibrous reinforcing material such as glass fibers or with any other mineral reinforcing materials such as talc, etc.

To prepare the reinforced polyamide resin for use in the invention, for example, a method of polymerizing

monomers for polyamide resin is employed, such as aminocarboxylic acids, lactams, diamines and dicarboxylic acids (including pairs of their salts), with a predetermined amount of a layered silicate being present in the polymerization system. Also employed is another method of melting and kneading a polyamide resin in a double-screw extruder with a layered silicate having been pre-treated with a long-chain quaternary ammonium salt.

The reinforced polyamide resin for use herein may be prepared by polycondensation of aminocarboxylic acids, or polymerization of lactams, or polycondensation of diamines and dicarboxylic acids.

Preferred examples of the polyamide resin include polycapramide (nylon 6), poly(tetramethylene adipamide) (nylon 46), poly(hexamethylene adipamide) (nylon 66), poly(hexamethylene sebacamide) (nylon 610), poly(hexamethylene dodecamide) (nylon 612), poly(undecamethylene adipamide) (nylon 116), polyundecanamide (nylon 11), polydodecanamide (nylon 12), poly(bis(4-aminocyclohexyl)methane dodecanamide) (nylon PACM12), poly(bis(3-methyl-4-aminocyclohexyl)methane dodecanamide) (nylon dimethylPACM12), poly(m-xylylene adipamide) (nylon MXD6), poly(hexamethylene terephthalamide) (nylon 6T), poly(hexamethylene isophthalamide) (nylon 6I), poly(nonamethylene terephthalamide) (nylon 9T), poly(undecamethylene terephthalamide) (nylon 11T), poly(undecamethylene hexahydroterephthalamide) (nylon 11T(H)), poly(trimethylhexamethylene terephthalamide) (nylon TMHT), as well as their copolyamides, mixed polyamides, etc. Of these, nylon 6 and its copolymers are preferred.

The relative viscosity of the polyamide resin is not specifically defined, but preferably falls between 1.5 and 5.0, when measured in a solvent of 96 wt.% concentrated sulfuric acid to have a resin concentration of 1 g/dl, at 25°C. If the relative viscosity of the polyamide resin is lower than 1.5, the mechanical strength including the flexural strength and the flexural modulus of the resin moldings will be low; but if higher than 5.0, the moldability of the resin will be greatly lowered.

The layered silicate to be added to the polyamide resin includes, for example, smectite minerals such as montmorillonite, beidellite, saponite, hectorite, sauconite, etc.; vermiculite minerals such as vermiculite, etc.; mica minerals such as muscovite, biotite, palagonite, lepidolite, swellable fluoromicas, etc.; clintonite minerals such as margarite, clintonite, anandite, etc.; chlorite minerals such as donbassite, sudoite, cookeite, clinochlore, chamosite, nimite, hydrous inosilicate minerals such as sepiolite, etc. Of these, swellable fluoromica minerals and montmorillonite are preferred. Especially preferred are swellable fluoromica minerals, because they are more uniformly dispersed in reinforced polyamide resins. In addition, because their interlayer distance can well expand without modification, the minerals do not require any specific pre-treatment with organic salts such as ammonium or onium salts of aminocarboxylic acids, etc.

Concretely, the swellable fluoromica minerals are derived from mica by substituting the hydroxyl groups in mica with fluorine atoms, and their chemical structure can be represented by the following formula:

$$(MF) \cdot \beta(aMgF_2 \cdot bMgO) \cdot \gamma SiO_2 \qquad (1)$$

wherein M represents sodium or lithium; $\alpha$, $\beta$, $\gamma$, a and b each represents the coefficient of a constituent ingredient, and are as follows: $0.1 \leqq \alpha \leqq 2$; $2 \leqq \beta \leqq 3.5$; $3 \leqq \gamma \leqq 4$; $0 \leqq \alpha \leqq 1$, $0 \leqq b \leqq 1$, and $a + b = 1$ .

The swellable fluoromica minerals can be produced, for example, by employing a melt method of blending silicon oxide and magnesium oxide with various fluorides, then completely melting the resulting blend in an electric or gas furnace at a temperature falling between 1400 and 1500°C, and cooling the resulting melt. In the cooling step in this method, crystals of the fluoromica minerals thus formed are grown.

Another method is also employed starting from talc, in which talc as the starting material is intercalated with alkali ions to obtain fluoromica minerals (Japanese Unexamined Patent Publication No. Hei 2-149415). Concretely, talc is blended with an alkali silicofluoride or an alkali fluoride, and the resulting blend is heated for a short period of time in a ceramic crucible at a temperature falling between 700 and 1200°C to obtain swellable fluoromica minerals.

The swellable fluoromica mineral is dispersed in monomers for forming a polyamide resin, and the monomers are polymerized to obtain a reinforced polyamide resin in which the interlayer distance between the adjacent layers of the layered silicate in the mineral expands to receive the polyamide resin therein. In the reinforced polyamide resin thus produced, the swellable fluoromica mineral is dispersed on the molecular level. Because its dispersibility in polyamide resin is high, the swellable fluoromica mineral can be well uniformly dispersed in polyamide resin. Therefore, even when a small amount of such a swellable fluoromica mineral is added to a polyamide resin, the resin can be well reinforced with the mineral, and, in addition, the polyamide resin reinforced with a mineral is more lightweight and has better heat resistance as compared with other polyamide resins reinforced with fibrous reinforcing materials.

To prepare the reinforced polyamide resin for use in the invention, for example, monomers for polyamide resin, such as aminocaproic acids, lactams, diamines and dicarboxylic acids (including pairs of their salts) are polymerized with a predetermined amount of a layered silicate such as that described above being present in the polymerization system.

The polyamide resin composition of the invention may optionally contain at most 200 parts by weight, relative to 100 parts by weight of the reinforced polyamide resin therein, of a non-reinforced polyamide. Concretely, for

example, chips of the polyamide resin composition and chips of a non-reinforced polyamide resin may be blended together, before being molded. The moldings of the polyamide resin composition containing a non-reinforced polyamide resin are better than those of the polyamide resin composition not containing a non-reinforced polyamide, as the tensile weld strength of the former is higher than that of the latter.

Preferred examples of the non-reinforced polyamide resin that may be blended with the reinforced polyamide resin to produce the resin composition of the invention are polycapramide (nylon 6), poly(tetramethylene adipamide) (nylon 46), poly(hexamethylene adipamide) (nylon 66), poly(hexamethylene sebacamide) (nylon 610), poly(hexamethylene dodecamide) (nylon 612), poly(undecamethylene adipamide) (nylon 116), polyundecanamide (nylon 11), polydodecanamide (nylon 12), poly(bis(4-aminocyclohexyl)methane dodecanamide) (nylon PACM12), poly(bis(3-methyl-4-aminocyclohexyl)methane dodecanamide) (nylon dimethylPACM12), poly(m-xylylene adipamide) (nylon MXD6), poly(hexamethylene terephthalamide) (nylon 6T), poly(hexamethylene isophthalamide) (nylon 6I), poly(nonamethylene terephthalamide) (nylon 9T), poly(undecamethylene terephthalamide) (nylon 11T), poly(undecamethylene hexahydroterephthalamide) (nylon 11T(H)), poly(trimethylhexamethylene terephthalamide) (nylon TMHT), as well as their copolyamides, mixed polyamides, etc. Of these, nylon 6, nylon 66, nylon 46, nylon 11 and nylon 12 are preferred, of which nylon 6 and nylon 66 are more preferred; as well as their copolyamides and mixed polyamides.

More preferably, the non-reinforced polyamide resin that may optionally be in the polyamide resin composition of the invention contains at most 1 % by weight of a nucleating agent. This is because the nucleating agent, if present, can further improve the crystallinity and therefore the moldability of the resin composition. The nucleating agent includes, for example, talc, silica, kaolin, graphite, magnesium oxide, aluminum oxide, etc. Talc is especially preferred.

The metallic color-expressing particles that are to incorporated into the polyamide resin composition of the invention are particles having a metallic reflective surface or blends of the metallic reflective surface-having particles and particles having a gray-white or white reflective surface.

The particles having a metallic reflective surface are metal particles or particles coated with a metal film.

The metal particles include particles of aluminum, nickel, tin, copper, iron, gold, silver, platinum, etc.; as well as particles of alloys based on these metals, such as brass, stainless, etc. Of these, particles of aluminum, nickel or tin are preferred; and aluminum particles are more preferred.

The particles coated with a metal film preferably are particles of a granular substrate except metal, such as resin, glass or the like coated with a metal film of, for example, the metals described above. So long as a metal film covers its surface, the substrate is not particularly limited. Specific examples of the substrate include various types of glass particles, carbon particles, various types of resin particles, etc. Specific examples of the substrate resin include fluororesins, epoxy resins, phenolic resins, nylon resins, crosslinked acrylic resins, crosslinked polystyrene resins, etc. The heat-resistant temperature of the substrate resin is to be controlled, depending on the molding temperature of the reinforced polyamide resin, that is, the matrix of the resin composition of the invention. If the heat-resistant temperature of the substrate resin is much lower than the molding temperature of the reinforced polyamide resin, that is, the matrix of the resin composition, the metal film-coated substrate resin particles will undergo too much thermal deformation when kneaded in melt with the matrix to obtain the resin composition. If so, moldings of the resulting resin composition are not able to express the intended metallic color tones. The method of coating the substrate particles of various types of glass particles, carbon particles, various types of resin particles and the like with a metal film is not particularly limited.

Fine particles having a gray-white or white reflective surface may be prepared by coating substrate particles of mica, glass flakes or the like with a gray-white or white material of titanium oxide or the like. Preferably, the gray-white or white material is glossy. Concretely, preferred for use in the invention is a pearly pigment of mica to be prepared by coating mica particles with titanium oxide. The method of coating the substrate of mica, glass flakes or the like with such a coating material is not particularly limited.

Precisely, aluminum powder is preferred for the particles having a metallic reflective surface; and a pearly pigment of mica is preferred for the particles having a gray-white or white reflective surface. More preferably, the powdery aluminum particles have a mean particle size of from 10 to 100 μm and an aspect ratio of from 5 to 3000; and the powdery pearly pigment particles of mica have a mean particle size of from 10 to 50 μm and an aspect ratio of from 5 to 500. One preferred embodiment of the polyamide resin composition of the invention comprises a reinforced polyamide resin such as that specifically noted hereinabove and contains from 0.1 to 10 parts by weight, relative to 100 parts by weight of the resin, of a blend of the aluminum powder and the pearly pigment of mica in a ratio by weight, aluminum powder/pearly pigment of mica, falling between 50/50 and 98/2.

The appearance of the molding of the polyamide resin composition depends on the particle size and aspect ratio of the metallic color-expressing particles present in the composition. The aspect ratio is a value obtained by dividing the diameter of one particle by the thickness thereof. If the mean particle size of the powdery aluminum particles present in the resin composition is smaller than 10 μm, moldings of the composition cannot have metallic color tones; but if larger than 100 μm, the particles will poorly disperse in the polyamide resin and, as a result, the resin moldings will have a glaring metallic surface. On the other hand, if the aspect ratio of the powdery aluminum particles in the composition is smaller than 5, the resin moldings will fail to have a glossy metallic surface and, after all, their surfaces will be almost white. Powdery aluminum particles having an aspect ratio of larger than 3000 are difficult to produce. Regarding the pearly pigment of mica present in the resin composition, if the mean particle size of the mica particles is smaller than 10 µm, the resin moldings could not have a metallic surface; but if larger than 50 µm, the particles will poorly disperse in the polyamide resin and, as a result, the resin moldings could not have a glossy surface. Powdery pearly pigment particles of mica having an aspect ratio of smaller than 5 are difficult to produce; and those having an aspect ratio of larger than 500 could hardly express a metallic color.

Where a blend of the aluminum powder and the pearly pigment of mica is present in the resin composition of the invention, the ratio by weight of the two, aluminum powder/pearly pigment of mica, desirably falls between 50/50 and 98/2, so that the moldings of the composition could have a beautiful metallic surface.

In the resin composition, the amount of the blend of the aluminum powder and the pearly pigment of mica in the above defined ratio shall fall between 0.1 and 10 parts by weight relative to 100 parts by weight of the reinforced polyamide resin that constitutes the composition. If the amount of the blend is smaller than 0.1 parts by weight, the resin moldings could not have a metallic surface and could not be glossy; but if larger than 10 parts by weight, the moldability of the composition will be poor.

Preferably, the polyamide resin composition of the invention contains at most 5 parts by weight, relative to 100 parts by weight of the reinforced polyamide resin therein, of a thermal discoloration inhibitor that may be selected from phosphite compounds, hindered phenolic compounds, thioether compounds and copper halides. Moldings of the polyamide resin composition containing such a thermal discoloration inhibitor are preferred, because their surfaces are not discolored even when exposed to high-temperature environments for a long period of time. That is, the moldings could have good thermal discoloration resistance. Even a minor amount of the thermal discoloration inhibitor, if added to the resin composition, could exhibit its ability to prevent the resin moldings from being thermally discolored. Therefore, as described above, the amount of the thermal discoloration inhibitor to be added to the resin composition of the invention is at most 5 parts by weight relative to 100 parts by weight of the reinforced polyamide resin in the composition. If the amount of the thermal discoloration inhibitor added is larger than 5 parts by weight, it increases the cost of the resin composition and therefore the resin moldings, and lowers the mechanical strength of the resin moldings.

Concretely, the polyamide resin composition having good thermal discoloration resistance has a color difference value, ΔE, of not larger than 12, when measured in the thermal discoloration test described below. The moldings of the polyamide resin composition having good thermal discoloration resistance are favorable, for example, for car engine covers and the like that are inevitably exposed to high-temperature environments while in use, concretely to those inevitably heated up to 120°C or so while in use, since discoloring can be prevented even when the moldings are used for a long period of time under such high-temperature conditions.

The thermal discoloration inhibitor that may be used in the invention for the intended purpose includes, for example, phosphite compounds, hindered phenolic compounds, thioether compounds and copper halides, as described above. Of these, phosphite compounds and hindered phenolic compounds are preferred; and phosphite compounds are more preferred.

Concretely, the phosphite compounds for use in the invention are represented by the following formula (2) or (3), and they are in the form of a white powder or white flakes at room temperature (25°C).

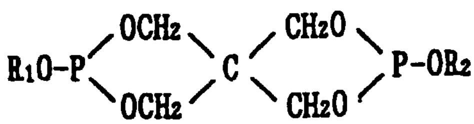

(2)

wherein $R_1$ and $R_2$ each represents an alkyl group having from 1 to 20 carbon atoms.

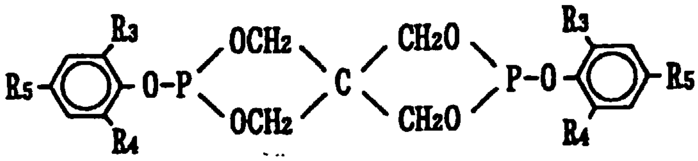

(3)

wherein $R_3$, $R_4$ and $R_5$ each represents an alkyl group having from 1 to 5 carbon atoms, or a hydrogen atom.

The compounds are commercially available, including, for example, Asahi Denka Industry's Adekastab PEP-8, PEP-8F, PEP-8W, PEP-11C; PEP-24G, PEP-36 (all trade names), etc. Preferred are PEP-24G and PEP-36; and more preferred is PEP-36.

The hindered phenolic compounds for use herein are represented by the following formula (4) or (5), and they have a molecular weight of not smaller than 450.

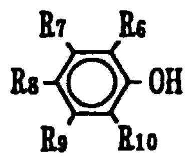

(4)

wherein $R_6$ represents an alkyl group having from 1 to 20 carbon atoms; and $R_7$ to $R_{10}$ each independently represents a hydrogen atom, an alkyl group having from 1 to 30 carbon atoms, or a monovalent organic group.

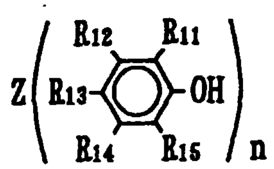

(5)

wherein $R_{11}$ represents an alkyl group having from 1 to 20 carbon atoms; three of $R_{12}$ to $R_{15}$ each independently represents a hydrogen atom, an alkyl group having from 1 to 30 carbon atoms, or a monovalent organic group, and the remaining one represents a chemical bond; n is an integer of from 2 to 4; and Z represents an n-valent residue.

Hindered phenolic compounds having a molecular weight of smaller than 450 are unfavorable, as they easily decompose to form a gas.

Specific examples of the hindered phenolic compounds for use herein include triethylene glycol bis-3-(3'-butyl-4'-hydroxy-5-methylphenyl)propionate, 1,3,5-tris(3',5'-di-t-butyl-4'-hydroxybenzoyl) isocyanurate, 1,3,5-trimethyl-2,4,6-tris(3',5'-di-t-butyl-4'-hydroxybenzyl)benzene, hexamethylene glycol bis-[β-(3,5-di-t-butyl-4-hydroxyphenyl)propionate], 6-(4'-hydroxy-3',5'-di-t-butylanilino)-2,4-bis-octylthio-1,3,5-triazine, tetrakis[methylene 3-(3',5'-di-t-butyl-4'-hydroxyphenyl)propionate]methane, 2,2'-thio[diethyl-bis-3-(3"",5"-di-t-butyl-4"-hydroxyphenyl) propionate], n-octadecyl 3-(4'-hydroxy-3',5'-di-t-butylphenol)propionate, N,N'-hexamethylene-bis-3-(3',5-di-t-butyl-4'-hydroxypropamide), 1,3,5-tris(3',5'-di-t-butyl-4'-hydroxybenzyl) isocyanurate, dimethyl ester of 3',5'-di-t-butyl-4'-hydroxybenzylphosphoric acid, nickel salt of monomethyl ester of bis((3,5-di-t-butyl-4-hydroxybenzylphosphoric acid), etc. Preferred is N,N'-hexamethylene-bis-3-(3',5'-di-t-butyl-4'-hydroxypropamide). One or more of these compounds may be used either singly or in combination. Concretely preferred are Ciba-Geigy's B1171, and Ajinomoto's Reofos TPP, etc.

The thioether compounds for use herein include, for example, Asahi Denka Industry's Adekastab AO-23, AO-412S, AO-503A (all trade names), etc.

The copper halides also for use herein include, for example, cuprous chloride, cupric chloride, cuprous iodide and cupric iodide. Cuprous chloride is preferred.

Where the resin composition contains a phosphite compound as the thermal deterioration inhibitor, its viscosity will increase. Therefore, for preventing the viscosity increase, it is desirable to add a fluidity improver to the composition. Preferably, the amount of the fluidity improver to be added is at most 5 parts by weight relative to 100 parts by weight of the reinforced polyamide resin in the composition. If the amount of the fluidity improver added is larger than 5 parts by weight, the mechanical strength and the heat resistance of the resin moldings will be low.

The fluidity improver is not particularly limited, but is preferably any of polyethylene oxide wax, aliphatic bisamides, and metal salts of higher fatty acids.

The polyethylene oxide wax is commercially available, including, for example, Yasuhara Chemical's Neowax E, Neowax E-20, Neowax E-3, Neowax AE-3 (all trade names), etc. Neowax E-20 is preferred.

The aliphatic bisamides include, for example, methylenebisstearylamide, methylenebislaurylamide, ethylenebisstearylamide, ethylenebislaurylamide, ethylenebisoleylamide, and ethylenebisbehenylamide. Ethylenebisstearylamide is preferred.

The metal salts of higher fatty acids include, for example, various metal salts of stearic acid, palmitic acid,

lauric acid, myristic acid, etc. Metal salts of stearic acid are preferred. Specific examples thereof include magnesium stearate, calcium stearate, barium stearate, aluminum stearate, zinc stearate, etc.

Also preferably, the polyamide resin composition contains at most 10 parts by weight, relative to 100 parts by weight of the reinforced polyamide resin therein, of an impact resistance improver.

The impact resistance improver for use herein is not particularly limited, so long as it is able to improve the impact resistance of the moldings of the resin composition. Concretely usable is at least one selected from impact resistance improvers of copolymers obtained from ethylene and unsaturated carboxylic acids or from ethylene and metal salts of unsaturated carboxylic acids; impact resistance improvers of olefinic copolymers having from 0.01 to 10 mol% of acid groups; impact resistance improvers of block copolymers obtained from vinylic aromatic compounds having from 0.01 to 10 mol% of acid groups and conjugated dienic compounds, or their hydrogenates, etc.

For the impact resistance improvers of copolymers obtained from ethylene and unsaturated carboxylic acids or from ethylene and metal salts of unsaturated carboxylic acids, the ethylene unit content of the copolymer is preferably from 90 to 98 mol% with the balance being substantially units of unsaturated carboxylic acids or units of metal salts of unsaturated carboxylic acids. The copolymers having an ethylene unit content that is too small are unfavorable to the resin composition. This is because the resin moldings will have poor impact resistance, though tough, and because the layers of the resin moldings having such poor impact resistance will readily peel off.

The unsaturated carboxylic acids include, for example, acrylic acid, methacrylic acid, ethacrylic acid, etc., and they may be partly esterified to methyl esters, ethyl esters, propyl esters, butyl esters, etc.

The metal salts of unsaturated carboxylic acids are salts of unsaturated carboxylic acids such as those described above with metals of the 4th Period of Groups IA, IB, IIA, IIB, IIIA and VIII of the Periodic Table of elements. The metals include, for example, sodium, potassium, copper, magnesium, calcium, barium, zinc, cadmium, aluminum, iron, cobalt, nickel, etc. Of these, sodium, potassium, magnesium, calcium, barium, and zinc are preferred.

For the impact resistance improvers of olefinic copolymers having from 0.01 to 10 mol% of acidic groups, the olefinic copolymers may be block copolymers or random copolymers containing at least 70 mol% of ethylene units and propylene units. In the copolymers, the ratio of the ethylene units to the propylene units may fall between 1/2 and 6/1 by mol. Preferably, the olefinic copolymers have a melt flow rate falling between 1 and 10, when measured at 230°C and under a load of 2.16 kg. Concretely, the olefinic copolymers can be obtained by copolymerization of olefinic hydrocarbons including, for example, ethylene, propylene, butylene, isoprene, amylene, etc.

The olefinic copolymers must contain from 0.01 to 10 mol% of acid groups. Those having an acid group content of smaller than 0.01 mol% will have poor compatibility with the polyamide resin, and could not so much improve the impact resistance of the resin moldings. Those having an acid group content of larger than 10 mol% are unfavorable for use herein, because they do not further improve the impact resistance of the resin moldings and because the productivity of the resin moldings is lowered. For introducing acid groups into the olefinic copolymers, a method of copolymerizing monomers with a radical generator, such as benzoyl peroxide, t-butyl hydroperoxide or the like being reacted with maleic anhydride, acrylic acid or the like in a copolymerization system can be used.

The olefinic copolymers may contain constituent units having an unsaturated bond. The constituent units having an unsaturated bond may be introduced into the olefinic copolymers by copolymerization with dicyclopentadiene, ethylidene norbornene, etc.

For the impact resistance improvers of block copolymers obtained from vinylic aromatic compounds having from 0.01 to 10 mol% of acid groups and conjugated dienic compounds, or their hydrogenates, the vinylic aromatic compounds as the starting materials for the block copolymers include, for example, styrene, vinylxylene, vinylnaphthalene, α-methylstyrene, vinyltoluene, etc. These monomers may be used either singly or in combination.

Preferably, the block copolymers have a block structure of I-II-I (in which two I's may be the same or different) wherein (I) indicates a polymer block of vinylic aromatic compound units and (II) indicates a polymer block of conjugated dienic compound units. By having the above block structure, the block copolymers can well improve the impact resistance of the resin moldings without interfering with the moldability of the resin composition. The polymer block (II) may be partly hydrogenated.

Regarding the ratio of the polymer block (I) to the polymer block (II) in the copolymer, it is desirable that the polymer block (II) accounts for at least 60 mol% of the copolymer. Copolymers where the proportion of the polymer block (II) is too small are unfavorable, because they could not exhibit the effect of improving the impact resistance of the resin moldings.

The copolymers are to have from 0.01 to 10 mol% of acid groups. Those of which the acid group content exceeds the defined range are unfavorable for the same reasons as mentioned above for the impact resistance improvers of olefinic copolymers having from 0.01 to 10 mol% of acid groups. For introducing acid groups into the vinylic aromatic compounds, the same method as that described above can be employed for introducing acid groups into the olefinic copolymers for use herein as impact resistance improvers.

The polyamide resin composition of the invention may optionally contain at most 10 parts by weight, relative to 100 parts by weight of the reinforced polyamide resin therein, of a reinforcing material. Adding a reinforcing material

to the composition further improves the mechanical strength including the flexural strength and the flexural modulus, and also the impact resistance of the moldings of the composition. However, if the amount of the reinforcing material added is larger than 10 parts by weight, the resin moldings could not exhibit metallic color tones.

Preferred examples of the reinforcing material include fibrous reinforcing materials such as glass fibers, etc.; minerals such as talc, mica, wollastonite, etc.; and mixtures thereof.

The fibrous reinforcing materials are fibrous additives such as short fibers, whiskers, fibrils and the like having good heat resistance and having good mechanical properties that include high elastic modulus, high strength, high elasticity restorability, etc. They include inorganic fibers such as glass fibers, aluminum fibers, potassium titanate whiskers, aluminum borate whiskers, etc.; and organic fibers such as aramide fibers, etc. Of these, glass fibers are preferred in overall consideration of their mechanical properties and cost.

Preferably, the glass fibers for the fibrous reinforcing material have a length of from 0.1 to 7 mm, more preferably from 0.3 to 5 mm. Also preferably, their diameter falls between 9 and 13 μm.

The minerals for the reinforcing material include, for example, talc, mica, wollastonite, clay, kaolin, silica, alumina, calcium carbonate, magnesium oxide, calcium silicate, sodium aluminate, sodium aluminosilicate, magnesium silicate, hydrotalcite, etc. Talc, mica and wollastonite are preferred.

The polyamide resin composition of the invention may optionally contain various additives, so long as the additives do not significantly interfere with the properties of the composition. The additives include, for example, light stabilizers, weather-proofing agents, plasticizers, lubricants, colorants, mold release agents, pigments, flame retardants, reinforcing agents except layered silicates, etc. These may be added to the composition while the composition is kneaded in melt or while it is molded in melt.

The method for producing the polyamide resin composition is not particularly limited. Preferably, however, the composition is produced by melting and kneading the reinforced polyamide resin, the metallic color-expressing particles and other optional additives such as a thermal deterioration inhibitor and others, in a double-screw extruder, followed by pelletizing the resulting melt. The resin composition thus produced can be molded into moldings using any ordinary molding method. For molding the composition, for example, hot melt molding methods of injection molding, extrusion molding or the like are employed. Injection molding is preferred.

The moldings of the polyamide resin composition of the invention are tough and lightweight and have good heat resistance and good impact resistance, and they exhibit a metallic appearance. Therefore, the moldings are advantageous as body components of vehicles, such as engine covers, cylinder head covers, timing belt covers, fenders, hoods, trunk lids, pillars, roofs, bumpers, door handles, wheel caps, two-wheeled muffler covers, hood garnishes, vent louvers, etc.; interior furnishings of vehicles, such as clusters, consoles, pillars, etc.; interior and exterior covers for home appliances, such as lamp reflectors, etc.; housings for electric tools; covers for dish-driers, fan heaters, heating tools, microwave cookers, etc. In particular, the moldings are advantageous as engine covers for vehicles.

## EXAMPLES

The invention is described concretely with reference to the following Examples, which, however, are not intended to restrict the scope of the invention.

In the following Examples and Comparative Examples, the physical properties of the samples produced were measured according to the methods described below.

(1) Dispersibility of layered silicate:

Using a wide-angle X-ray diffractometer (Rigaku's Model RAD-rB), the dispersibility of the layered silicate in resin pellets was measured.

(2) Relative viscosity of reinforced polyamide resin and that of non-reinforced polyamide resin:

Dry resin pellets were dissolved in a solvent of 96 wt.% concentrated sulfuric acid to have a resin concentration of 1 g/dl, and the relative viscosity of the resulting resin solution was measured at 25°C.

(3) Flexural strength (MPa) and flexural modulus (GPa):

Measured according to the method described in ASTM-D-790.

(4) Deflection temperature under load (°C):

Measured according to the method described in ASTM-D-648, in which the sample was maintained under a

stress of 1.86 MPa.

(5) Izod impact strength (J/m):

Measured according to the method described in ASTM-D-648, in which a sample piece having a thickness of 3.2 mm was notched to a predetermined depth.

(6) Tensile weld strength:

Measured according to the method described in ASTM-D-638. Briefly, ASTM-D-638-I dumbbell pieces were prepared in a mold for dumbbell pieces, which had two gates at both ends. The dumbbell pieces had a thickness of 3.2 mm and had a weld line in the center part. These were subjected to the indicated tensile test.

(7) Metallic appearance:

Sample plates having a width of 50 mm, a length of 90 mm and a thickness of 2mm were prepared. These were macroscopically observed from all angles under a fluorescent lamp in a room to evaluate their appearance and ingredient dispersibility. Based on the following criteria, the samples were grouped into three ranks.

○: Much light was reflected from the surface, and the ingredients were dispersed uniformly.
△: The light reflection from the surface and the ingredient dispersibility were both at an average level.
X: Only a little light was reflected from the surface, and the ingredients were unevenly dispersed.

(8) Specific gravity:

Measured in water according to the method described in JIS-K7112.

(9) Thermal discoloration resistance:

Sample plates having a square area of 50 mm × 90 mm and a thickness of 2 mm were placed in an oven at 120°C for 400 hours. Before and after placing in the oven, the surface of each sample plate was measured with a spectrometric color difference meter (Nippon Denshoku's SZ-Σ90). Based on the color difference, ΔE, thus obtained, the thermal discoloration resistance of each sample was evaluated. Samples with a smaller ΔE have better thermal discoloration resistance.

(10) Appearance of engine covers:

Molded engine covers were checked for the presence or absence of weld lines and flow marks in their surfaces. Based on the following criteria, the inspected samples were grouped into three ranks.

◎: Few weld lines and flow marks were found.
○: When checked carefully; some weld lines and flow marks were found.
△: Many weld lines and flow marks were found.

(11) Surface condition of engine covers:

Molded engine covers were checked for their surface condition. Based on the following criteria indicating the condition of their metallic appearance, the inspected samples were grouped into three ranks.

◎: Glossy and beautiful metallic appearance found.
○: Metal powder-like glaring appearance found.
△: Grayish but not glossy appearance found.

(12) Falling ball impact energy (J):

Test pieces of 1.6 (thickness) of 100 ∅ (diameter) in size were prepared. According to DuPont's falling ball impact test method, a one-kg ball was dropped onto the test pieces. The falling ball impact energy absorbed by each sample was obtained according to the following formula:

Falling ball impact energy (J) = G0 + (G1 - G0)/2

wherein,

G0 = (largest height not breaking the sample) × (gravitational acceleration) × (weight of the dropping ball),

G1 = (smallest height having broken the sample) × (gravitational acceleration) × (weight of the dropping ball).

(13) Drop test:

Molded engine covers having a wall thickness of 3 mm, a length of 500 mm, a width of 500mm and a depth of about 100 mm were prepared. These were annealed at 130°C for 65 hours. The thus-annealed engine covers were conditioned under any of the following conditions 1 or 2. After thus conditioned, the engine covers were dropped onto a concrete surface from a height of 1 m in two different modes, one being plane dropping in which the top board (the designed board) of each sample was struck against the concrete surface, and the other being edge dropping in which any of the edges of each sample was struck against the concrete surface. Having been thus dropped, the appearance of the samples was checked.
Condition 1: kept at 23°C and 50 % RH for 3 hours.
Condition 2: kept at 23°C and 50 % RH for 72 hours.

(14) Appearance of plates:

Sample pieces having a thickness of 2 (t) and a square area of 70 mm × 90 mm were prepared, and their appearance was evaluated based on the following two-rank criteria:

◎: Had a glossy and whitish metallic surface.
○: Had a dark surface.

(15) Fluidity (mm)

Measured according to a method of measuring the bar flow length of molding resin, in which a test mold with a spiral die having a width of 20 mm and a thickness of 2 mm was used. For the samples comprising nanocomposite nylon 6 or nylon 6 as the polyamide resin, the resin temperature was 250°C; and for those comprising nylon 66, the resin temperature was 280°C. For all samples, the mold temperature was 80°C, and the injection pressure was 80 MPa. The flow length of each sample through the mold was measured.

<u>Example 1</u>:

A swellable fluoromica mineral was prepared for the reinforcing polyamide resin. Concretely, 80 % by weight of talc was blended with 20 % by weight of sodium silicofluoride. Prior to being blended together, the two were separately milled in a ball mill into particles having a mean particle size of 2 µm. The resulting blend was put into a ceramic crucible, which was then kept in an electric furnace at 800°C for 1 hour to prepare a fluoromica mineral.
The powder of the thus-prepared fluoromica mineral was subjected to wide-angle X-ray diffractometry using a wide-angle X-ray diffractometer, Rigaku's Model BAD-rB. The diffraction pattern thus obtained failed to have a peak at 9.2 Å indicating the C-axis direction of the starting material talc, but had a peak at 12 to 13 Å indicating the formation of a swellable fluoromica mineral.
A resin nylon 6 was reinforced with the swellable fluoromica mineral.
One kg of water and 200 g of the swellable fluoromica mineral were added to 10 kg of ε-caprolactam, a starting material for nylon 6. These were put into a 30-liter reactor, in which the ε-caprolactam was polymerized. Precisely, the blend was heated to 250°C, while being stirred, and the pressure in the reactor was elevated to 15kg/cm$^2$ with the water vapor formed being gradually discharged. Next, the reactor was degassed to normal pressure, and the monomer was polymerized therein at 260°C for 3 hours. After having been thus polymerized, the reinforced nylon 6 resin formed was removed from the reactor and pelletized into pellets. The pellets were purified by processing with hot water at 95°C, and then dried in vacuum.
The thus-obtained, reinforced nylon 6 resin had a relative viscosity of 2.5, And contained 2.0 % by weight, relative to 100 % by weight of the total, of the swellable fluoromica mineral.

The pellets of the reinforced nylon 6 resin were subjected to wide-angle X-ray diffractometry. In the diffraction pattern, no peak intrinsic to the swellable fluoromica mineral in its thickness direction was seen. From this, it was verified that the swellable fluoromica mineral was uniformly dispersed on the molecular level in the nylon 6 resin matrix.

To 100 parts by weight of the reinforced nylon 6 resin pellets, 1 part by weight of aluminum powder, Sumitomo Color's EPC-8E-297 was added. The aluminum powder was composed of particles capable of expressing a metallic color, and had a mean particle size of 15 μm and an aspect ratio of 750. The blend was pelletized into pellets using a double-screw kneader (Toshiba Machinery's TEM-37BS). The cylinder temperature was 260°C.

The pellets were molded into test pieces, using an injection-molding machine (Toshiba Machinery's Model IS-80). The cylinder temperature was 250°C. The test pieces were tested for their flexural strength, flexural modulus, deflection temperature under load, Izod impact strength, tensile weld strength, metallic appearance and specific gravity.

The physical data of the test pieces are given in Table 1.

Table 1

| | | | Ex. 1 | Ex. 2 | Ex. 3 | Co.Ex.1 | Co.Ex.2 | Co.Ex.3 | Co.Ex.4 |
|---|---|---|---|---|---|---|---|---|---|
| Blend Ratio | Reinforced Polyamide Resin | type (wt.pts.) | A1* 100 | A2* 100 | A2* 100 | | | | |
| | Metallic Color-Expressing Particles (aluminum powder) | particle size (µm) | 15 | 15 | 50 | 15 | 15 | 50 | 50 |
| | | aspect ratio | 750 | 750 | 2500 | 750 | 750 | 2500 | 2500 |
| | | (wt.pts.) | 1 | 1 | 2 | 1 | 1 | 1 | 1 |
| | Glass Fibers | (wt.pts.) | | | | | 20 | 15 | |
| | Wollastonite | (wt.pts.) | | | | | | | 30 |
| | Nylon 6 | (wt.pts.) | | | 100 | 100 | 80 | 85 | 70 |
| Physical Proper-ties of Test Pieces | Flexural Strength | (MPa) | 140 | 160 | 140 | 92 | 175 | 153 | 125 |
| | Flexural Modulus | (GPa) | 4.0 | 4.5 | 4.0 | 2.7 | 5.0 | 4.2 | 4.3 |
| | Deflection Temperature under load | (°C) | 146 | 152 | 146 | 70 | 195 | 185 | 120 |
| | Izod Impact Strength | (J/m) | 39 | 40 | 39 | 53 | 69 | 62 | 26 |
| | Tensile Weld Strength | MPa | 40 | 39 | 54 | 63 | 62 | 54 | 64 |
| | Metallic Appearances | | ○ | ○ | ○ | ○ | × | Δ | × |
| | Specific Gravity | | 1.15 | 1.16 | 1.17 | 1.15 | 1.28 | 1.24 | 1.39 |

A1*: Reinforced polyamide resin prepared by adding 2 % by weight of swellable fluoromica mineral to nylon 6.

A2*: Reinforced polyamide resin prepared by adding 4 % by weight of swellable fluoromica mineral to nylon 6.

Example 2:

A polyamide resin composition was prepared in the same manner as in Example 1, except that the blend ratio of the constituent ingredients was varied as follows: 400 g of the swellable fluoromica mineral prepared in the above manner and 1 kg of water were added to the starting material for nylon 6, ε-caprolactam, and the blend was put into the reactor.
The other conditions were the same as in Example 1, and resin pellets were produced.
The reinforced nylon 6 resin prepared herein had a relative viscosity of 2.2, and contained 4.0 % by weight, relative to 100 % by weight of the total, of the swellable fluoromica mineral. As in Example 1, the swellable fluoromica mineral was uniformly dispersed on the molecular level in the nylon 6 resin matrix.
To 100 parts by weight of the reinforced nylon 6 resin, 1 part by weight of the same aluminum powder having a mean particle size of 15 μm and an aspect ratio of 750 as in Example 1 was added. The resin pellets were molded into test pieces, also in the same manner as in Example 1.
The physical data of the test pieces are given in Table 1.

Example 3:

To 100 parts by weight of the reinforced nylon 6 resin pellets that had been prepared in Example 2 were added 2 parts by weight of aluminum powder, Sumitomo Color's EPC-8E-340, which powder was composed of particles capable of expressing a metallic color and had a mean particle size of 50 μm and an aspect ratio of 2500, and 100 parts by weight of a non-reinforced polyamide resin, nylon 6 (A1030JR from Unitika) having a relative viscosity of 2.5. The blend was processed in the same manner as in Example 1 to prepare test pieces.
The physical data of the test pieces are given in Table 1.
In the polyamide resin compositions of Examples 1 to 3, the polyamide resin was reinforced with a swellable fluoromica mineral in a ratio falling within the scope of the invention. Therefore, the moldings of the compositions all had high mechanical strength including high flexural strength and high flexural modulus, and had good impact resistance and good heat resistance, and their specific gravity was small. In addition, since the metallic color-expressing aluminum powder was added to the compositions in a ratio falling within the scope of the invention, the moldings all had good metallic appearance.
Above all, in Example 3, a non-reinforced polyamide resin, nylon 6 was added to the polyamide resin composition comprising the reinforced polyamide resin and the metallic color-expressing aluminum powder, in a ratio falling within the scope of the invention. Therefore, the moldings of Example 3 had a much increased tensile weld strength.
Accordingly, the moldings of these Examples are all advantageous as engine covers for vehicles.

Comparative Example 1:

To 100 parts by weight of pellets of a non-reinforced polyamide resin, nylon 6 (A1030JR from Unitika) having a relative viscosity of 2.5 but not containing a swellable fluoromica mineral was added 1 part by weight of the same aluminum powder having a mean particle size of 15 μm and an aspect ratio of 750 as in Example 1. The blend was processed in the same manner as in Example 1 to prepare test pieces.
The physical data of the test pieces are given in Table 1.

Comparative Example 2:

One part by weight of the same aluminum powder having a mean particle size of 15 μm and an aspect ratio of 750 as in Example 1 was added to a blend totaling 100 parts by weight and comprising 80 parts by weight of pellets of a non-reinforced polyamide resin, nylon 6 (A1030JR from Unitika) having a relative viscosity of 2.5 but not containing a swellable fluoromica mineral, and 20 parts by weight of glass fibers (T-289 from Nippon Electric Glass) having a diameter of 13 μm and a length of 3 mm. This composition was processed in the same manner as in Example 1 to prepare test pieces.
The physical data of the test pieces are given in Table 1.

Comparative Example 3:

One part by weight of the same aluminum powder having a mean particle size of 50 μm and an aspect ratio of 2500 as in Example 3 was added to a blend totaling 100 parts by weight and comprising 85 parts by weight of the same nylon 6 resin pellets and 15 parts by weight of the same glass fibers as in Comparative Example 2. This composition was processed in the same manner as in Example 1 to prepare test pieces.

The physical data of the test pieces are given in Table 1.

Comparative Example 4:

One part by weight of the same aluminum powder having a mean particle size of 50 µm and an aspect ratio of 2500 as in Example 3 was added to a blend totaling 100 parts by weight and comprising 70 parts by weight of pellets of a non-reinforced polyamide resin, nylon 6 (A1030JR from Unitika) having a relative viscosity of 2.5 but not containing a swellable fluoromica mineral, and 30 parts by weight of wollastonite (EPW-400 from Kinseimatic). This was processed in the same manner as in Example 1 to prepare test pieces.
The physical data of the test pieces are given in Table 1.
The composition of Comparative Example 1 did not contain a reinforced polyamide resin, and its moldings had low flexural strength, low flexural modulus and poor heat resistance.
The compositions of Comparative Examples 2 and 3 did not contain a reinforced polyamide resin but contained a reinforcing material, glass fibers. Therefore, their moldings were not glossy and did not have a good metallic appearance. In addition, the compositions had a large specific gravity and were heavy.
The composition of Comparative Example 4 did not contain a reinforced polyamide resin but contained a reinforcing material, wollastonite. Therefore, its moldings looked whitish, and did not have a metallic appearance. In addition, the composition had a large specific gravity and was heavy.

Example 4:

To 50 parts by weight of the reinforced nylon 6 resin pellets that had been prepared in Example 2 were added 1 part by weight of aluminum powder, Sumitomo Color's EPC-8E-340, which powder was composed of particles capable of expressing a metallic color and had a mean particle size of 50 µm and an aspect ratio of 2500, and 50 parts by weight of pellets of a non-reinforced polyamide resin, nylon 6 (A1030JR from Unitika) having a relative viscosity of 2.5. The blend was processed in the same manner as in Example 1 to prepare test pieces.
The physical data of the test pieces are given in Table 2.

Table 2

| | | | Ex.4 | Ex.5 | Ex.6 | Ex.7 | Ex.8 |
|---|---|---|---|---|---|---|---|
| Blend Ratio | Reinforced Polyamide Resin | Type | A2* | A2* | A2* | A2* | A2* |
| | | (wt.pts.) | 50 | 50 | 50 | 50 | 50 |
| | Metallic Color-Expressing Particles (aluminum powder) | Particle size(μm) | 50 | 50 | 50 | 50 | 50 |
| | | Aspect ratio | 2500 | 2500 | 2500 | 2500 | 2500 |
| | | (wt.pts.) | 1 | 1 | 1 | 1 | 1 |
| | Thermal Discoloration Inhibitor | Type | - | PEP36 | B1171 | cuprous chloride | AO-23 |
| | | (wt.pts.) | - | 1 | 1 | 1 | 1 |
| | Nylon 6 | (wt.pts.) | 50 | 50 | 50 | 50 | 50 |
| Physical Properties of Test Pieces | Flexural Strength | (MPa) | 140 | 140 | 140 | 140 | 140 |
| | Flexural Modulus | (GPa) | 4.0 | 4.0 | 4.0 | 4.0 | 4.0 |
| | Deflection Temperature under load | (°C) | 146 | 146 | 146 | 146 | 146 |
| | Izod Impact Strength | (J/m) | 40 | 40 | 40 | 40 | 40 |
| | Tensile Weld Strength | Mpa | 54 | 54 | 54 | 54 | 54 |
| | Metallic Appearances | | ○ | ○ | ○ | ○ | ○ |
| | Specific Gravity | | 1.17 | 1.17 | 1.17 | 1.17 | 1.17 |
| | ΔE | | 15 | 4 | 8 | 10 | 5 |

A2*: Reinforced polyamide resin prepared by adding 4 % by weight of swellable fluoromica mineral to nylon 6.

Example 5:

Test pieces were prepared in the same manner as in Example 4, except that 1 part by weight of a phosphite compound (Adekastab PE236 from Asahi Denka Industry) serving as a thermal discoloration inhibitor was added to the composition comprising the reinforced nylon 6 resin pellets, the aluminum powder and the non-reinforced polyamide resin pellets.

The physical data of the test pieces are given in Table 2.

Example 6:

Test pieces were prepared in the same manner as in Example 4, except that 1 part by weight of a hindered phenol (B1171 from Ciba-Geigy) serving as a thermal discoloration inhibitor was added to the composition comprising the reinforced nylon 6 resin pellets, the aluminum powder and the non-reinforced polyamide resin pellets.

The physical data of the test pieces are given in Table 2.

Example 7:

Test pieces were prepared in the same manner as in Example 4, except that 1 part by weight of cuprous chloride (chemical reagent) serving as a thermal discoloration inhibitor was added to the composition comprising the reinforced nylon 6 resin pellets, the aluminum powder and the non-reinforced polyamide resin pellets.

The physical data of the test pieces are given in Table 2.

Example 8:

Test pieces were prepared in the same manner as in Example 4, except that 1 part by weight of a thioether compound (Adekastab AO-23 from Asahi Denka Industry) serving as a thermal discoloration inhibitor was added to the composition comprising the reinforced nylon 6 resin pellets, the aluminum powder and the non-reinforced polyamide resin pellets.

The physical data of the test pieces are given in Table 2.

As in Examples 1 to 3, the polyamide resin in the composition of Example 4 was reinforced with a swellable fluoromica mineral in a ratio falling within the scope of the invention, and the composition contained metallic color-expressing aluminum powder also in a ratio falling within the scope of the invention. Therefore, the moldings of the composition had high mechanical strength including high flexural strength and high flexural modulus, and had good impact resistance and good heat resistance, and their specific gravity was small. In addition, they had a good appearance.

The compositions of Examples 5 to 8 contained, in addition to the same ingredients as in Example 4, a thermal discoloration inhibitor in a ratio falling within the scope of the invention. Therefore, their moldings all had a smaller color difference value and had better thermal discoloration resistance, as compared with those of Example 4.

Accordingly, the moldings of these Examples were better than those of Examples 1 to 4 and were more advantageous as engine covers for vehicles.

Example 9:

A nanocomposite nylon 6 (M2350 from Unitika) with a layered silicate, swellable fluoromica mineral uniformly dispersed therein on the molecular level was used as a resin ingredient. The nanocomposite nylon 6 resin had a relative viscosity of 2.4, and contained 2.0 % by weight, relative to 100 % by weight of the total, of a swellable fluoromica mineral. This was synthesized by polymerizing in the presence of the additive mineral.

To 100 parts by weight of pellets of the reinforced nanocomposite nylon 6 were added 1 part by weight of aluminum powder (Sumitomo Color's EPC-8E-340) composed of particles capable of expressing a metallic color and having a mean particle size of 50 μm and an aspect ratio of 2500, and 0.2 parts by weight of a pearly pigment of mica (Merck Japan's Iriodin #100) having a mean particle size of 20 μm and an aspect ratio of 67. The blend was pelletized into pellets using a double-screw kneader (Toshiba Machinery's TEM-37BS). The cylinder temperature was 260°C. The pellets were molded into test pieces, using an injection-molding machine (Toshiba Machinery's Model IS-100E). The cylinder temperature was 250°C. The mold temperature was 80°C. The injection pressure was 100 MPa. The test pieces were rectangular plates having a width of 50 mm, a length of 90 mm and a thickness of 2 mm.

The surface reflectance, metallic appearance, flexural modulus, deflection temperature under load, the specific gravity of the resin plates produced herein are given in Table 3.

Table 3

| | | | | Ex. 9 | Ex. 10 |
|---|---|---|---|---|---|
| Ingredients | Reinforced Polyamide Resin | | Type | Nanocomposite Nylon 6 M2350 | Nanocomposite Nylon 6 1015C2 |
| | | | Resin Ingredient | Nylon 6 | Nylon 6 |
| | | | Layered silicate | Swellable Fluoromica Mineral 2 | Montmorillonite 2 |
| | | | (wt.pts.) | 100 | 100 |
| | Metallic Color-Expressing Particles | Aluminum Powder | particle size (μm) | 50 | 50 |
| | | | aspect ratio | 2500 | 2500 |
| | | | (wt.pts.) | 1 | 1 |
| | | Pearly Pigment | particle size (μm) | 20 | 20 |
| | | | aspect ratio | 67 | 67 |
| | | | (wt.pts.) | 0.2 | 0.2 |
| Physical Properties of Moldings | Surface Reflectance (%) | | | 66 | 65 |
| | Metallic Appearances | | | O | O |
| | Flexural Modulus (GPa) | | | 4.1 | 3.5 |
| | Deflection Temperature under load (°C) | | | 147 | 147 |
| | Specific Gravity | | | 1.15 | 1.15 |

Example 10:

A nanocomposite nylon 6 (1015C2 from Ube Industries) with a layered silicate, montmorillonite uniformly dispersed therein on the molecular level was used as a resin ingredient. The nanocomposite nylon 6 resin had a relative viscosity of 2.6, and contained 2 % by weight, relative to 100 % by weight of the total, of montmorillonite. This was synthesized by polymerizing in the presence of the additive montmorillonite.
The other conditions were the same as in Example 9, and resin moldings were produced.
The physical properties of the resin moldings are given in Table 3.
In the resin moldings of Examples 9 and 10, the polyamide resin reinforced with a layered silicate contained metallic color-expressing particles. Therefore, the resin moldings had a surface reflectance of at least 60 %, and had a good metallic appearance.
In addition, since the essential ingredient, polyamide resin in the moldings was reinforced with a layered silicate, the moldings had a high flexural modulus and good heat resistance, and had a small specific gravity.
Accordingly, the resin moldings were all advantageous as engine covers for vehicles.

Example 11:

The same reinforced nanocomposite nylon resin 6 as in Example 9 was used as a resin ingredient. To 100 parts by weight of pellets of the reinforced nanocomposite nylon 6 were added 1.2 parts by weight of aluminum powder (Sumitomo Color's EPC-8E-340) composed of particles capable of expressing a metallic color and having a mean particle size of 50 μm and an aspect ratio of 2500, and 0.4 parts by weight of a pearly pigment of mica (from Takara Tsusho) having a mean particle size of 45 μm and an aspect ratio of 64. The blend was pelletized into pellets using a double-screw kneader (Toshiba Machinery's TEM-37BS). The cylinder temperature was 260°C.
The pellets were molded into engine covers using an injection-molding machine (Toshiba Machinery's Model IS-450). The cylinder temperature was 250°C. The mold temperature was 80°C. The injection pressure was 100 MPa.
The engine covers were inspected for their appearance, and the test results are given in Table 4.

Table 4

| | | | | Ex. 11 | Ex. 12 | Ex. 13 | Ex. 14 |
|---|---|---|---|---|---|---|---|
| Ingredients | Reinforced Polyamide Resin | | type | nanocomposite nylon 6 | nanocomposite nylon 6 | nanocomposite nylon 6 | Nanocomposite nylon 6 |
| | | | trade name | M2350 | M2350 | M2350 | M2350 |
| | | | (wt.pts.) | 100 | 100 | 100 | 100 |
| | Metallic Color-Expressing Particles | Aluminum Powder | particle size (μm) | 50 | 50 | 95 | 55 |
| | | | aspect ratio | 2500 | 2500 | 38 | 7.3 |
| | | | (wt.pts.) | 1.2 | 0.6 | 2 | 1.6 |
| | | | particle size (μm) | | 55 | | 95 |
| | | | aspect ratio | | 7.3 | | 38 |
| | | | (wt.pts.) | | 0.3 | | 0.4 |
| | | Pearly Pigment | particle size (μm) | 45 | 15 | | |
| | | | aspect ratio | 64 | 10 | | |
| | | | (wt.pts.) | 0.4 | 0.2 | | |
| | | | particle size (μm) | | 45 | | |
| | | | aspect ratio | | 64 | | |
| | | | (wt.pts.) | | 0.4 | | |
| Physical Properties of Engine Covers | Appearance Inspection of Moldings (sensual test) | Weld Lines, Flow Marks | | △ | ○ | ○ | ◎ |
| | | Metallic Appearances | | ◎ | ◎ | ○ | △ |

Example 12:

To prepare metallic color-expressing particles for use herein, 0.6 parts by weight of aluminum powder (Sumitomo Color's EPC-8E-340) having a mean particle size of 50 μm and an aspect ratio of 2500, 0.3 parts by weight of aluminum powder (Daiwa Metal Powder Industry's 102C) having a mean particle size of 55 μm and an aspect ratio of 7.3, 0.2 parts by weight of a pearly pigment of mica (Merck Japan's Iriodin #111) having a mean particle size or 15 μm and an aspect ratio of 64, and 0.4 parts by weight of a pearly pigment of mica (from Takara Tsusho) having a mean particle size of 45 μm and an aspect ratio of 64 were blended.
The other conditions were the same as in Example 11, and engine covers were produced.
The engine covers were inspected for their appearance, and the test results are given in Table 4.

Example 13:

As the metallic color-expressing particles, aluminum powder (Daiwa Metal Powder's 102B) having a mean particle size of 95 μm and an aspect ratio of 38 was used. 2 parts by weight of the aluminum powder only was added to the reinforced resin, but the pearly pigment of mica was not.
The other conditions were the same as in Example 11, and engine covers were produced.
The engine covers were inspected for their appearance, and the test results are given in Table 4.

Example 14:

As the metallic color-expressing particles were used 1.6 parts by weight of aluminum powder (Daiwa Metal Powder's 102C) having a mean particle size of 55 μm and an aspect ratio of 7.3, and 0.4 parts by weight of aluminum powder (Daiwa Metal Powder's 102B) having a mean particle size of 95 μm and an aspect ratio of 38, but not the pearly pigment of mica.
The other conditions were the same as in Example 11, and engine covers were produced.
The engine covers were inspected for their appearance, and the test results are given in Table 4.
In Example 11, the aluminum powder and the pearly pigment of mica added to the reinforced polyamide resin had a large aspect ratio. Therefore, the engine covers of Example 11 had some weld lines and flow marks in their surfaces. However, because these samples contained the pearly pigment of mica in addition to the aluminum powder, they had a glossy and good metallic appearance.
In Example 12, the same aluminum powder and pearly pigment of mica both having a large aspect ratio as in Example 11 were added to the reinforced polyamide resin. In Example 12, however, another type of aluminum powder and another pearly pigment of mica both having a small aspect ratio were further added to the resin. Therefore, the weld line and the flow marks seen in the surfaces of the engine covers of Example 12 were reduced to an almost negligible degree. In addition, like those of Example 11, the engine covers of Example 12 contained not only aluminum powder but also the pearly pigments of mica, and they had a glossy and good metallic appearance.
In Example 13, aluminum powder only was added to the reinforced polyamide resin which had a relatively small aspect ratio. Therefore, the weld lines and the flow marks seen in the surfaces of the engine covers of Example 13 were reduced to an almost negligible degree. However, because they did not contain a pearly pigment of mica, the engine covers of Example 13 had a glaring appearance, and their metallic appearance were somewhat inferior to those of the engine covers of Examples 11 and 12.
In Example 14, aluminum powder having a small aspect ratio was added to the reinforced polyamide resin, in addition to the same aluminum powder as in Example 13. Therefore, the engine covers of Example 14 had a good appearance with neither weld lines nor flow marks. However, because they contained an increased amount of the aluminum powder having a small aspect ratio, the surfaces of the engine covers of Example 14 were grayish and were not glossy, and their metallic appearance wes relatively poor.

Example 15:

The same nanocomposite nylon 6 (M2350 from Unitika) as in Example 9 was used as a resin ingredient. To 97 parts by weight of pellets of the reinforced nanocomposite nylon 6 were added 1.2 parts by weight of aluminum powder (Sumitomo Color's EPC-8E-340) composed of particles capable of expressing a metallic color and having a mean particle size of 50 μm and an aspect ratio of 2500, and 0.4 parts by weight of a pearly pigment of mica (from Takara Tsusho) having a mean particle size of 45 μm and an aspect ratio of 64. To this was further added 3 parts by weight of an impact resistance improver, maleic anhydride-grafted ethylene-propylene copolymer (Mitsui Chemical's Toughmer M1307), for improving the impact resistance of resin moldings. The blend was pelletized into pellets using a double-screw kneader (Toshiba Machinery's TEM-37BS). The cylinder temperature was 260°C.

The pellets were molded into test pieces using an injection-molding machine (Toshiba Machinery's Model IS-80). The cylinder temperature was 250°C. The test pieces were tested by measuring the falling ball impact energy that they could absorb.

The physical properties of the test pieces are given in Table 5. For comparison, the data of the test pieces of Example 11 not containing the impact resistance improver are also given in Table 5.

Table 5

| | | | | Ex. 11 | Ex. 15 | Ex. 16 | Ex. 17 |
|---|---|---|---|---|---|---|---|
| Ingredients | Reinforced Polyamide Resin | | type | nanocomposite nylon 6 | nanocomposite nylon 6 | nanocomposite nylon 6 | Nanocomposite nylon 6 |
| | | | trade name | M2350 | M2350 | M2350 | M2350 |
| | | | (wt.pts.) | 100 | 97 | 95 | 93 |
| | Metallic Color-Expressing Particles | Aluminum Powder | particle size (µm) | 50 | 50 | 50 | 50 |
| | | | aspect ratio | 2500 | 2500 | 2500 | 2500 |
| | | | (wt.pts.) | 1.2 | 1.2 | 1.2 | 1.2 |
| | | Pearly Pigment | particle size (µm) | 45 | 45 | 45 | 45 |
| | | | aspect ratio | 64 | 64 | 64 | 64 |
| | | | (wt.pts.) | 0.4 | 0.4 | 0.4 | 0.4 |
| | Impact Resistance Improver | | type | - | T-1* | T-1* | T-1* |
| | | | (wt.pts.) | 0 | 3 | 5 | 7 |
| Physical Properties | Falling Ball Impact Energy (J) | | | 8.3 | 10.8 | 12.7 | 16.7 |

T-1*: Maleic anhydride-grafted ethylene-propylene copolymer (Toughmer M1307).

Examples 16, 17:

The blend ratio of the reinforced nanocomposite nylon 6 pellets to the impact resistance improver was varied as in Table 5.
The other conditions were the same as in Example 15, and test pieces were produced.
The data of the test pieces in the falling fall impact energy test are given in Table 5.
The falling ball impact energy capable of being absorbed by the test pieces of Examples 15 to 17 was larger than that of the test pieces of Example 11 not containing the impact resistance improver. The moldings capable of absorbing such a large degree of falling ball impact energy are advantageous as housings such as engine covers, etc.

Example 18:

The same nanocomposite nylon 6 (M2350 from Unitika) as in Example 9 was used as a resin ingredient. To 94 parts by weight of pellets of the reinforced nanocomposite nylon 6 were added 1.2 parts by weight of aluminum powder (Sumitomo Color's EPC-8E-340) composed of particles capable of expressing a metallic color and having a mean particle size of 50 μm and an aspect ratio of 2500, and 0.4 parts by weight of a pearly pigment of mica (from Takara Tsusho) having a mean particle size of 45 μm and an aspect ratio of 64. To this were further added 2 parts by weight of glass fibers (T-289 from Nippon Electric Glass) and 4 parts by weight of talc (Microace K-1 from Nippon Talc), both for improving the impact resistance of resin moldings. The blend was pelletized into pellets using a double-screw kneader (Toshiba Machinery's TEM-37BS). The cylinder temperature was 260°C.
The pellets were molded into engine covers using an injection-molding machine (Toshiba Machinery's Model IS-450). The cylinder temperature was 250°C. The engine covers were subjected to a drop test.
The data of the drop test of the engine covers are given in Table 6. For comparison, the data of the samples of Example 11 containing neither an impact resistance improver nor a reinforcing agent, and those of the samples of Example 15 containing an impact resistance improver only are given in Table 6.

Table 6

| | | | | Ex. 11 | Ex. 15 | Ex. 18 | Ex. 19 |
|---|---|---|---|---|---|---|---|
| Ingredients | Reinforced Polyamide Resin | | type | nanocomposite nylon 6 | nanocomposite nylon 6 | Nanocomposite nylon 6 | nanocomposite nylon 6 |
| | | | trade name | M2350 | M2350 | M2350 | M2350 |
| | | | (wt.pts.) | 100 | 97 | 94 | 85 |
| | Metallic Color-Expressing Particles | Aluminum Powder | particle size (μm) | 50 | 50 | 50 | 50 |
| | | | aspect ratio | 2500 | 2500 | 2500 | 2500 |
| | | | (wt.pts.) | 1.2 | 1.2 | 1.2 | 1.2 |
| | | Pearly Pigment | particle size (μm) | 45 | 45 | 45 | 45 |
| | | | aspect ratio | 64 | 64 | 64 | 64 |
| | | | (wt.pts.) | 0.4 | 0.4 | 0.4 | 0.4 |
| | Impact Resistance Improver | | (wt.pts.) | | 3 | | |
| | Glass Fibers | | (wt.pts.) | | | 2 | 5 |
| | Talc | | (wt.pts.) | | | 4 | 3 |
| Physical Properties | Drop Test | Condition 1 | Plane Dropping<br>Edge Dropping | Broken in 3rd dropping. | Safe in 3rd dropping. Cracked in 2nd dropping | Cracked in 3rd dropping. | Cracked in 3rd dropping. |
| | | Condition 2 | Plane Dropping<br>Edge Dropping | Safe in 3rd dropping. Broken in 1st dropping. | Safe in 3rd dropping. Cracked in 2nd dropping. | Safe in 3rd dropping. Cracked in 1st dropping. | Safe in 3rd dropping. Cracked in 1st dropping. |

Example 19:

The blend ratio of the reinforced nanocomposite nylon 6 pellets to the reinforcing agent, glass fibers and talc was varied as in Table 6.
The other conditions were the same as in Example 18, and test samples were produced.
The data of the test samples in the drop test are given in Table 6.
The samples of Examples 18 and 19 were somewhat less broken under both condition 1 and condition 2, as compared with those of Example 11 containing neither an impact resistance improver nor a reinforcing agent. When compared with the samples of Example 15 containing an impact resistance improver, the physical properties of the samples of Examples 18 and 19 were relatively poor, but were on a practicable level for engine covers.

Example 20:

For producing resin moldings, a pigment master batch was first prepared. Precisely, 84 % of pellets of the same nanocomposite nylon 6 (Unitika's M2350) as in Example 9, 12 % of aluminum powder (Sumitomo Color's EPC-8E-340) having a particle size of 50 µm and an aspect ratio of 2500, and 4 % of a pearly pigment of mica (from Takara Tsusho) having a particle size of 45 µm and an aspect ratio of 64 were blended, and the resulting blend was kneaded in a single-screw kneader (Empla Industry's ED-65) to prepare a pigment master batch (CM-1). The cylinder temperature was 260°C.
10 parts by weight of pellets of the pigment master batch (CM-1) were blended with 90 parts of pellets of the same nanocomposite nylon 6 as above. The resulting blend was molded into test pieces using an injection-molding machine (Toshiba Machinery's Model IS-80). The cylinder temperature was 250°C. The test pieces were inspected for their appearance.
The results of the inspection test are given in Table 7. For comparison, the data of the samples of Example 11 in which the nanocomposite nylon 6 pellets, the aluminum powder and the pearly pigment of mica were directly kneaded in melt all at one time without preparing a pigment master batch, are also given in Table 7.

Table 7

| | | | | Ex. 11 | Ex. 20 | Ex. 21 | Ex. 22 |
|---|---|---|---|---|---|---|---|
| Ingredients | Reinforced Polyamide Resin | | type | nanocomposite nylon 6 | nanocomposite nylon 6 | nanocomposite nylon 6 | nanocomposite nylon 6 |
| | | | trade name | M2350 | M2350 | M2350 | M2350 |
| | | | (wt.pts.) | 100 | 90 | 80 | 70 |
| | Metallic Color-Expressing Particles | Aluminum Powder | particle size (μm) | 50 | | | |
| | | | aspect ratio | 2500 | | | |
| | | | (wt.pts.) | 1.2 | | | |
| | | Pearly Pigment | particle size (μm) | 45 | | | |
| | | | aspect ratio | 64 | | | |
| | | | (wt.pts.) | 0.4 | | | |
| | Pigment Master Batch | | type | | CM-1* | CM-2* | CM-3* |
| | | | (wt.pts.) | | 10 | 20 | 30 |
| Physical Properties | Appearances | | | ○ | ◎ | ◎ | ◎ |

CM-1*: aluminum powder 12 %; pearly pigment of mica 4 %; nanocomposite nylon 6 (M2350) 84 %.

CM-2*: aluminum powder 6 %; pearly pigment of mica 2 %; nanocomposite nylon 6 (M2350) 92 %.

CM-3*: aluminum powder 3 %; pearly pigment of mica 1 %; nanocomposite nylon 6 (M2350) 96 %.

Example 21:

In the same manner as in Example 20, pellets of a pigment master batch (CM-2) were prepared which was comprised of 92 % of pellets of the same nanocomposite nylon 6 as in Example 9, 6 % of aluminum powder (Sumitomo Color's EPC-8E-297) having a particle size of 50 µm and an aspect ratio of 2500, and 2 % of a pearly pigment of mica (from Takara Tsusho) having a particle size of 45 µm and an aspect ratio of 64. The pigment master batch (CM-2) pellets were blended with the same nanocomposite nylon 6 pellets as above in the ratio indicated in Table 7.

Also in the same manner as in Example 20, the resulting blend was molded into test pieces, and these were inspected for their appearance.

The results of the inspection test are given in Table 7.

Example 22:

In the same manner as in Example 20, pellets of a pigment master batch (CM-3) were prepared which was comprised of 96 % of pellets of the same nanocomposite nylon 6 as in Example 9, 3 % of aluminum powder (Sumitomo Color's EPC-8E-297) having a particle size of 50 µm and an aspect ratio of 2500, and 1 % of a pearly pigment of mica (from Takara Tsusho) having a particle size of 45 µm and an aspect ratio of 64. The pigment master batch (CM-3) pellets were blended with the same nanocomposite nylon 6 pellets as above in the ratio indicated in Table 7.

Also in the same manner as in Example 20, the resulting blend was molded into test pieces, and these were inspected for their appearance.

The results of the inspection test are given in Table 7.

In Examples 20 to 22, pigment master batch pellets were first prepared, and then blended with nanocomposite nylon 6 pellets (reinforced polyamide resin pellets). Therefore, the resin moldings of Examples 20 to 22 all had a whitish and glossy appearance and were better than those of Example 11 in which a pigment was directly mixed in nanocomposite nylon 6 pellets (reinforced polyamide resin pellets).

Example 23:

The same reinforced nanocomposite nylon resin 6 (Unitika's M2350) as in Example 9 was used as a resin ingredient. To 100 parts by weight of pellets of the reinforced nanocomposite nylon 6 were added 1.0 part by weight of aluminum powder (Sumitomo Color's EPC-8E-340) composed of particles capable of expressing a metallic color and having a mean particle size of 50 µm and an aspect ratio of 2500, 1 part by weight of a phosphite compound (Asahi Denka's Pep36) serving as a thermal discoloration inhibitor, and 1 part by weight of polyethylene oxide wax (from Yasuhara Chemical) serving as a fluidity improver. The blend was pelletized into pellets using a double-screw kneader (Toshiba Machinery's TEM-37BS). The cylinder temperature was 260°C. The pellets were molded into test pieces, using an injection-molding machine (Toshiba Machinery's Model IS-100E). The cylinder temperature was 250°C. The mold temperature was 80°C. The injection pressure was 100 MPa. The test pieces were tested for their thermal discoloration resistance. In addition, the flow length of the pellets during molding was measured.

The data obtained are given in Table 8.

Table 8

| | | | Ex. 23 | Ex. 24 | Ex. 25 | Ex. 26 | Ex. 27 |
|---|---|---|---|---|---|---|---|
| Resin | Reinforced Polyamide Resin | type | Nanocomposite nylon 6 | nanocomposite nylon 6 | nanocomposite nylon 6 | nanocomposite nylon 6 | nanocomposite nylon 6 |
| | | trade name | M2350 | M2350 | M2350 | M2350 | M2350 |
| | | (wt.pts.) | 100 | 97 | 95 | 93 | 93 |
| Metallic Color-Expressing Particles | Aluminum Powder | particle size (μm) | 50 | 50 | 50 | 50 | 50 |
| | | aspect ratio | 2500 | 2500 | 2500 | 2500 | 2500 |
| | | (wt.pts.) | 1.0 | 1.0 | 1.0 | 1.0 | 1.0 |
| Additives | Thermal Discoloration Inhibitor | type | Pep36 | Pep36 | Pep36 | Pep36 | Pep36 |
| | | (wt.pts.) | 1 | 1 | 1 | 1 | 1 |
| | Fluidity Improver | type | Pewax | EB 0.65 | EB | $St_2Zn$ | - |
| | | (wt.pts.) | 1 | $St_2Zn$ 0.25 | 0.9 | 0.9 | - |
| Physical Properties | Thermal Discoloration Resistance | ΔE | 5 | 4 | 4 | 4 | 4 |
| | Flow Length | (mm) | 58 | 58 | 56 | 58 | 40 |

*Pewax: Polyethylene oxide wax.

*EB: Ethylenebisstearylamide.

Example 24:

Resin pellets were prepared in the same manner as in Example 23, except that 0.65 parts by weight of ethylenebisstearylamide (Slipax E from Nippon Kasei) and 0.25 parts by weight of zinc stearate (from Sakai Chemical) were used as the fluidity improver in place of 1 part by weight of polyethylene oxide wax. The resin composition thus prepared was tested for thermal discoloration resistance of its moldings and the flow length of its pellets in the same manner as above.
The data obtained are given in Table 8.

Example 25:

Resin pellets were prepared in the same manner as in Example 23, except that 0.9 parts by weight of ethylenebisstearylamide (Slipax E from Nippon Kasei) was used as the fluidity improver in place of 1 part by weight of polyethylene oxide wax. The resin composition thus prepared was tested for thermal discoloration resistance of its moldings and the flow length of its pellets in the same manner as above.
The data obtained are given in Table 8.

Example 26:

Resin pellets were prepared in the same manner as in Example 23, except that 0.9 parts by weight of zinc stearate (from Sakai Chemical) was used as the fluidity improver in place of 1 part by weight of polyethylene oxide wax. The resin composition thus prepared was tested for thermal discoloration resistance of its moldings and the flow length of its pellets in the same manner as above. The data obtained are given in Table 8.

Example 27:

For comparison, 1 part by weight of the thermal discoloration inhibitor, Pep36 (from Asahi Denka) only, but not the fluidity improver was used in preparing resin pellets in the same manner as in Example 23. The resin composition thus prepared was tested for thermal discoloration resistance of its moldings and the flow length of its pellets in the same manner as above.
The data obtained are given in Table 8.
In Examples 23 to 27, aluminum powder and a phosphite compound (Pep36), the latter serving as a thermal discoloration inhibitor, were added to 100 parts by weight of the nanocomposite nylon 6 resin in a ratio falling within the scope of the invention. In these, therefore, the moldings obtained had a good metallic appearance and good thermal discoloration resistance. In Examples 23 to 26, a fluidity improver was further added to the resin composition for preventing the increase in viscosity of the composition to which was added the phosphite compound (Pep36). Therefore, the resin compositions of Examples 23 to 26 had better moldability and their flow length was longer, as compared with the resin composition of Example 27.
As described hereinabove, the polyamide resin composition of the invention is suitable to interior and exterior covers for home appliances and to housings for electric appliances. The polyamide resin composition of the invention is especially advantageous for engine covers.

**Claims**

1. A polyamide resin composition, which comprises 100 parts by weight of a polyamide resin reinforced with from 0.1 to 10 % by weight of a layered silicate uniformly dispersed therein on a molecular level, and from 0.1 to 10 parts by weight of particles capable of expressing a metallic color.

2. The polyamide resin composition as claimed in claim 1, wherein the layered silicate is selected from swellable fluoromica minerals and montmorillonite.

3. The polyamide resin composition as claimed in claim 1, which further contains at most 200 parts by weight, relative to 100 parts by weight of the reinforced polyamide resin, of a non-reinforced polyamide resin.

4. The polyamide resin composition as claimed in claim 1, wherein the metallic color-expressing particles are particles having a metallic reflective surface or blends of particles having metallic reflective surface and particles having a gray-white or white reflective surface.

5. The polyamide resin composition as claimed in claim 4, wherein the particles having a metallic reflective surface are particles of aluminum, nickel or tin.

6. The polyamide resin composition as claimed in claim 4, wherein the particles having a gray-white or white reflective surface are composed of a pearly pigment of mica.

7. The polyamide resin composition as claimed in claim 5, wherein the metallic particles having a reflective surface are composed of aluminum powder having a mean particle size of from 10 to 100 μm and an aspect ratio of from 5 to 3000.

8. The polyamide resin composition as claimed in claim 6, wherein the particles having a gray-white or white reflective surface are composed of a pearly pigment of mica having a mean particle size of from 10 to 50 μm and an aspect ratio of from 5 to 500.

9. The polyamide resin composition as claimed in claim 4, wherein the blend of particles having a metallic reflective surface and particles having a gray-white or white reflective surface is a blend of aluminum powder and a pearly pigment of mica in a ratio by weight, aluminum powder/pearly pigment of mica, falling between 50/50 and 98/2.

10. The polyamide resin composition as claimed in claim 1, which further contains at most 5 parts by weight, relative to 100 parts by weight of the reinforced polyamide resin, of a thermal discoloration inhibitor selected from the group consisting of phosphite compounds, hindered phenolic compounds, thioether compounds and copper halides.

11. The polyamide resin composition as claimed in claim 1, which further contains at most 10 parts by weight, relative to 100 parts by weight of the reinforced polyamide resin, of an impact resistance improver.

12. The polyamide resin composition as claimed in claim 1, which further contains at most 10 parts by weight, relative to 100 parts by weight of the reinforced polyamide resin, of a reinforcing agent.

13. The polyamide resin composition as claimed in claim 1, which further contains at most 5 parts by weight, relative to 100 parts by weight of the reinforced polyamide resin, of a phosphite compound serving as a thermal discoloration inhibitor, and at most 5 parts by weight, relative to the same, of a fluidity improver.

14. The polyamide resin composition as claimed in claim 13, wherein the fluidity improver is selected from polyethylene oxide wax, aliphatic bisamides and metal salts of higher fatty acids.

## INTERNATIONAL SEARCH REPORT

International application No.
PCT/JP98/04023

A. CLASSIFICATION OF SUBJECT MATTER
Int.Cl$^6$ C08L77/00, C08K3/34

According to International Patent Classification (IPC) or to both national classification and IPC

B. FIELDS SEARCHED

Minimum documentation searched (classification system followed by classification symbols)
Int.Cl$^6$ C08L77/00-77/12, C08K3/00-13/08

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 8-12883, A (Unitika Ltd.), 16 January, 1996 (16. 01. 96), Claims ; page 3, column 3, lines 25 to 31 ; page 4, column 5, lines 29 to 36 ; page 5, column 7, lines 10 to 27 (Family: none) | 1-14 |
| Y | JP, 8-283566, A (Unitika Ltd.), 29 October, 1996 (29. 10. 96), Claims ; page 2, column 2, lines 1 to 3 ; page 3, column 3, lines 34 to 43, column 4, lines 2 to 9 (Family: none) | 1-14 |
| Y | JP, 5-93091, A (Dainichi Seika Colour & Chemicals Mfg. Co., Ltd.), 16 April, 1993 (16. 04. 93), Claims ; page 2, column 1, line 4 to column 2, line 23 (Family: none) | 1-14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 2 December, 1998 (02. 12. 98) | 8 December, 1998 (08. 12. 98) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No. PCT/JP98/04023

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 6-9866, A (Sumitomo Chemical Co., Ltd.), 18 January, 1994 (18. 01. 94), Claims ; page 2, column 2, lines 1 to 8 (Family: none) | 10 |
| Y | JP, 3-97755, A (Adeka Argus Chemical Co., Ltd.), 23 April, 1991 (23. 04. 91), Claims ; page 2, upper right column, lines 5 to 9 (Family: none) | 10 |
| Y | JP, 7-70448, A (Asahi Chemical Industry Co., Ltd.), 14 March, 1995 (14. 03. 95), Claim 2 ; page 3, column 3, lines 1 to 7, 34 to 41 (Family: none) | 13-14 |

Form PCT/ISA/210 (continuation of second sheet) (July 1992)